# EUROPEAN PATENT APPLICATION

(11) **EP 4 299 774 A1**
(43) Date of publication of application: **03.01.2024**
(21) Application number: 21935138.4
(22) Date of filing: 24.11.2021
(51) Int. Cl.: C22B 1/16

(54) **PRODUCTION METHOD AND DISINTEGRATION SUPPRESSION METHOD FOR SINTERED ORE**

(30) Priority: 31.03.2021 JP 2021060166
(71) Applicant: JFE Steel Corporation, Tokyo 100-0011 (JP)
(72) Inventor: TAKEHARA Kenta, Tokyo 100-0011 (JP); HIGUCHI Takahide, Tokyo 100-0011 (JP); YAMAMOTO Tetsuya, Tokyo 100-0011 (JP)
(74) Representative: Hoffmann Eitle
(86) International application number: PCT/JP2021/042919
(87) International publication number: WO 2022/208985

(57) **Abstract**

Proposed are a production method and a disintegration suppression method for sintered ore that allow sintered ore having a low reduction-disintegration property to be obtained through raw material design and temperature control, without requiring an expensive facility investment. In this sintered ore production method, compounded raw materials for sintering are granulated to produce granulated raw materials for sintering, and the granulated raw materials for sintering are sintered to obtain sintered ore. As the compounded raw materials for sintering, materials of which a ratio Fe₂O₃ / (Fe₂O₃ + CaO) between Fe₂O₃ and CaO included among the materials is within a range of 0.76 to 0.84 are used for sintering. Thus, the reduction-disintegration property (RDI) of the sintered ore can be improved.

## Description

### Technical Field

The present invention relates to a production method and a disintegration suppression method for sintered ore having excellent reduction-disintegration characteristics that is used as a raw material for a direct-reduction process or a blast furnace process.

### Background Art

A blast furnace used in iron industry is a facility in which lump ore, sintered ore, etc. that are iron sources are charged from a furnace top along with coke, while a reducing gas is blown in from a lower part of the furnace to melt and reduce the iron sources and thereby produce molten pig iron. To promote the reaction between the reducing gas and the iron sources, it is necessary to allow a sufficient amount of gas to flow inside the blast furnace, and enhancing the air permeability inside the furnace to increase the production rate of molten pig iron and achieve a cost reduction is important.

It is generally known that reduction in a blast furnace causes a decrease in strength of the sintered ore and makes it prone to disintegration, which is called reduction disintegration. To enhance the air permeability in a blast furnace, particularly disintegration of sintered ore constituting a raw material need be mitigated, and suppression of the aforementioned reduction disintegration is sought.

Air permeability has been recently important as in the blast furnace process in the countercurrent flow layer-type direct-reduction process (MIDREX^{®}) developed to cut down CO₂. In particular, when disintegration during reduction increases, clustering that is agglomeration inside the furnace occurs, and this clustering obstructs the discharge of raw materials, which is highly likely to lead to major operation troubles.

In view of the above, sintered ore that does not undergo reduction disintegration is demanded as a raw material for both the conventional direct-reduction process and the blast furnace process. It is known that in reduction disintegration of sintered ore, as hematite in the sintered ore turns into magnetite during reduction, volume expansion occurs and cracks form, causing a decrease in strength and further disintegration. As methods for mitigating the reduction disintegration of sintered ore, technologies for reducing secondary hematite have been hitherto proposed.

As technologies for suppressing the formation of secondary hematite, Patent Literatures 1 and 2 propose technologies that sinter magnetite ore through irradiation with microwaves, and it is mentioned that this sintering method enables the production of sintered ore composed mainly of magnetite. Patent Literature 3 proposes a technology that decreases the amount of hematite including secondary hematite by decreasing hematite in sintered ore and reducing it to wustite.

### Citation List

### Patent Literature

Patent Literature 1: JP2020-41222A
Patent Literature 2: JP2018-510970A (Japanese Translation of PCT International Application Publication)
Patent Literature 3: JP2003-293045A

### Summary of Invention

### Technical Problem

However, the methods disclosed in Patent Literatures 1 and 2 have a problem in that they are applicable only to magnetite (Fe₃O₄)-based ore that is, as an iron source, available in fewer quantities in the market, so that facility and running costs tend to be high. The method disclosed in Patent Literature 3 requires using a reducing gas to reduce the iron source and thus has a problem that the sintering machine needs to be equipped with a reducing device, which adds to the running cost for reduction.

An object of the present invention is to provide a production method and a disintegration suppression method for sintered ore that allow sintered ore having a low reduction-disintegration property to be obtained through raw material design and temperature control, without requiring an expensive facility investment.

### Solution to Problem

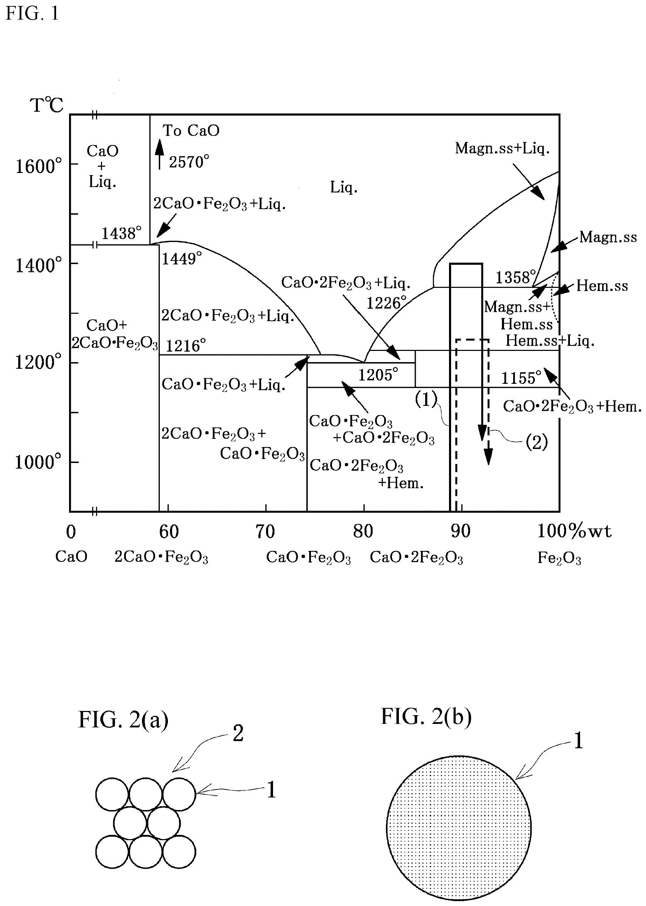

In conducting research for solving the above-described problems with the conventional technologies and achieving the object, the present inventors first focused on a state diagram of Fe₂O₃ and CaO (see FIG. 1). In the process, we have learned that there is a region where mainly calcium ferrite crystallizes by adjusting a ratio Fe₂O₃ / (Fe₂O₃ + CaO) when a solid phase is crystalized from melt. Sintering in this region has not been hitherto performed because, in a common idea, after coming out of a sintering machine, sintered ore is usually cooled by a cooling machine and returns to room temperature and therefore hematite is likely to crystallize in the end.

We focused on the fact that a sintering machine is for a process of rapid cooling and developed a method that reduces the formation of secondary hematite by cooling the sintered ore before the calcium ferrite to be crystallized turns into hematite. Specifically, we considered various temperatures and components and discovered that adjusting the components of the surfaces of quasi-particles before sintering as described above could reduce the reduction-disintegration property (RDI).

That is, the present invention is a sintered ore production method involving granulating compounded raw materials for sintering to produce granulated raw materials for sintering and sintering the granulated raw materials for sintering to obtain sintered ore. This sintered ore production method is characterized in that the compounded raw materials for sintering of which a ratio Fe₂O₃ / (Fe₂O₃ + CaO) between Fe₂O₃ and CaO is within a range of 0.76 to 0.84 is used.

The present invention is a sintered ore disintegration suppression method, characterized in that sintered ore having a low reduction-disintegration property can be obtained by using compounded raw materials for sintering of which a ratio Fe₂O₃ / (Fe₂O₃ + CaO) between Fe₂O₃ and CaO is within a range of 0.76 to 0.84.

In the sintered ore production method according to the present invention configured as described above, the following are more preferable aspects:
(1) The ratio Fe₂O₃ / (Fe₂O₃ + CaO) between Fe₂O₃ and CaO included in the iron-source raw materials is set to 0.76 to 0.80.
(2) Fe₂O₃ and CaO included in the compounded raw materials for sintering with the ratio Fe₂O₃ / (Fe₂O₃ + CaO) adjusted to 0.76 to 0.84, are added from a later stage during granulation of compounded raw materials for sintering other than the Fe₂O₃ and CaO.

### Advantageous Effects of Invention

The present invention focuses on Fe₂O₃ and CaO included in compounded raw materials for sintering and can produce sintered ore having a low reduction-disintegration property by setting a ratio therebetween, i.e., Fe₂O₃ / (Fe₂O₃ + CaO) to 0.76 to 0.84, without requiring an expensive capital investment. Moreover, the present invention can adopt a granulation process with a relatively inexpensive investment, and suppress secondary hematite. The ratio Fe₂O₃ / (Fe₂O₃ + CaO) is described as a ratio by weight in this application.

### Brief Description of Drawings

FIG. 1 is a state diagram of Fe₂O₃ and CaO.
FIG. 2 (a) and FIG. 2(b) are views explaining one embodiment of a state of particles in sintered ore produced by a production method of the present invention.
FIG. 3 (a) and FIG. 3(b) are views explaining another embodiment of a state of particles in sintered ore produced by a production method of the present invention.

### Description of Embodiments

A sintered ore production method and a sintered ore disintegration suppression method according to the present invention will be explained below.

FIG. 1 shows a state diagram of Fe₂O₃ and CaO in sintered ore. Sintered ore is typically produced to have such an element composition as shown in FIG. 1 by heating, cooling, and sintering granulated raw materials for sintering including Fe₂O₃ and CaO after granulation. Here, when undergoing route (1) in FIG. 1, sintered ore reaches a magnetite formation region when heated to 1350°C or higher, where hematite remaining in the sintered ore turns into magnetite. When cooled from there, magnetite turns into hematite, and when further cooled to reach about 1350°C or lower, hematite starts to be crystallized. This crystallized hematite is called secondary hematite. It is known that secondary hematite aggravates reduction disintegration due to its shape and composition. The same applies to the low-temperature sintering route (2) in FIG. 1; while the amount of melted materials is small and the amount of crystallization can be reduced, secondary hematite forms during the cooling process.

Here, a closer look at the state diagram of FIG. 1 revealed that when the ratio Fe₂O₃ / (Fe₂O₃ + CaO) was within a region of 0.74 to 0.85 and the sintering temperature was near 1150°C to 1200°C and that the crystallization of hematite was not caused, and the present invention took notice of this fact. That is, in the region where the ratio Fe₂O₃ / (Fe₂O₃ + CaO) is 0.74 to 0.80, monocalcium ferrite (CF) forms as primary crystals and after that dicalcium ferrite (C₂F) crystallizes. In a region where the ratio Fe₂O₃ / (Fe₂O₃ + CaO) is 0.80 to 0.85, while hematite crystallizes as primary crystals, at 1200°C or lower, a stable phase of CF and C₂F as in the above case appears.

Therefore, the present invention focused on a method in which the ratio Fe₂O₃ / (Fe₂O₃ + CaO) is set to 0.74 to 0.85 to prevent crystallization of hematite, and even when hematite is crystallized, to thereby reduce secondary hematite is suppressed by thereafter sintering with a composition where calcium ferrite forms. Tests as described below were conducted to find a sintered ore production method effective for mitigating disintegration of sintered ore.

Granulated particles of sintering raw materials undergo a process of being heated from the surface, a method of creating a granulated material of which the surfaces of particles had the aforementioned composition while the inside thereof was mainly composed of hematite was explored. As a result of conducting the tests as will be described below, we learned that secondary hematite was not formed in the surfaces of granulated particles to be melted and that secondary hematite was not formed in the inside thereof as it had a low temperature and did not melt easily, and found a sintered ore production method suitable for the present invention.

FIG. 2 (a) and FIG. 2(b) are views each explaining one embodiment of the state of particles in sintered ore produced in accordance with a production method of the present invention. FIG. 2 (a) shows sintered ore 2 composed of a plurality of particles 1, and FIG. 2 (b) shows one particle 1 constituting the sintered ore 2. FIG. 2 (a) shows the sintered ore 2 obtained by granulating compounded raw materials for sintering with the ratio Fe₂O₃ / (Fe₂O₃ + CaO) between Fe₂O₃ and CaO adjusted to 0.76 to 0.84 to produce granulated raw materials for sintering and then sintering these granulated raw materials for sintering, and FIG. 2(b) shows the particle 1 constituting the sintered ore 2. In this example, the particle 1 is formed with a single layer. In this example, the ratio Fe₂O₃ / (Fe₂O₃ + CaO) between Fe₂O₃ and CaO is preferably 0.76 to 0.80.

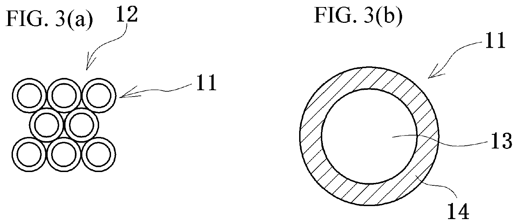

FIG. 3 (a) an FIG. 3(b) are views each explaining another embodiment of a state of particles in sintered ore produced in accordance with a production method of the present invention. FIG. 3 (a) shows sintered ore 12 composed of a plurality of particles 11, and FIG. 3 (b) shows one particle 11 constituting the sintered ore 12. FIG. 3 (a) and FIG. 3(b) show examples of the sintered ore 12 and the particles 11 composing this sintered ore 12, respectively. The sintered ore 12 is obtained by adding raw materials with the ratio Fe₂O₃ / (Fe₂O₃ + CaO) between Fe₂O₃ and CaO adjusted to 0.76 to 0.84 from a later stage during granulation of compounded raw materials for sintering other than Fe₂O₃ and CaO of which the ratio Fe₂O₃ / (Fe₂O₃ + CaO) is adjusted to 0.76 to 0.84 to produce granulated raw materials for sintering, and then sintering these granulated raw materials for sintering. In this example, the particle 11 is composed of an inner layer 13 that is mainly composed of hematite and an outer layer 14 of which the ratio Fe₂O₃ / (Fe₂O₃ + CaO) is adjusted to 0.76 to 0.84.

### Examples

### <Test 1>

Compounded raw materials for sintering (iron ore, limestone, return ore, and coke breeze) mixed at various ratios listed in Table 1 below and water (moisture that makes the granulated material 7.5%) were fed into a drum mixer and granulated for a total of five minutes to produce granulated raw materials for sintering. As ore A, ore B, and ore C in Table 1, ore from a northern part of South America, ore from a southern part of South America, and Australian ore, respectively, were used.

**[Table 1]**

| | Ore A (mass%) | Ore B (mass%) | Ore C (mass%) | Limestone (mass%) | Quicklime (mass%) | Return ore (mass%) | Coke breeze (not included in total) (mass%) |
|---|---|---|---|---|---|---|---|
| Comparative Example 1 | 96.8 | 0.0 | 0.0 | 0.0 | 3.2 | 0.0 | 5.0 |
| Comparative Example 2 | 38.0 | 20.0 | 10.0 | 10.0 | 2.0 | 20.0 | 4.5 |
| Example 1 | 86.8 | 0.0 | 0.0 | 0.0 | 13.2 | 0.0 | 5.0 |
| Example 2 | 82.1 | 0.0 | 0.0 | 0.0 | 17.9 | 0.0 | 4.7 |
| Example 3 | 36.0 | 23.0 | 2.0 | 15.0 | 4.0 | 20.0 | 4.9 |
| Example 4 | 36.0 | 20.0 | 2.0 | 10.0 | 13.0 | 20.0 | 4.5 |

Thereafter, the granulated raw materials for sintering were sintered using a pot testing machine to obtain sintered ore. The sintering was performed in a state where the air volume was held constant at 1.2 m³/min. The obtained sintered ore was subjected to a chemical analysis and a reduction-disintegration test. The reduction-disintegration test was performed in accordance with the method specified in JIS M8720, and the reduction-disintegration index (RDI) of each sintered ore was obtained. Table 2 below shows the components and the RDIs of the sintered ores.

**[Table 2]**

| | T.Fe (mass%) | Fe₃O₃ (mass%) | FeO (mass%) | CaO (mass%) | SiO₂ (mass%) | Fe₃O₃ / (Fe₃O₃ + CaO) | RDI |
|---|---|---|---|---|---|---|---|
| Comparative Example 1 | 65.5 | 75.3 | 16.6 | 3.8 | 2.0 | 0.95 | 49.4 |
| Comparative Example 2 | 57.4 | 75.9 | 5.5 | 10.1 | 5.1 | 0.88 | 31.6 |
| Example 1 | 56.5 | 69.3 | 10.3 | 12.7 | 6.0 | 0.84 | 16.4 |
| Example 2 | 55.2 | 70.1 | 7.9 | 18.1 | 1.9 | 0.80 | 8.9 |
| Example 3 | 53.8 | 67.0 | 8.9 | 15.2 | 5.0 | 0.82 | 9.9 |
| Example 4 | 50.1 | 62.7 | 6.0 | 20.8 | 4.5 | 0.76 | 7.7 |

From the result of Table 2, it can be seen that in Example 1, setting the ratio Fe₂O₃ / (Fe₂O₃ + CaO) to 0.84 led to an improved RDI compared with those in Comparative Examples 1 and 2. Further, it can be seen that in Examples 2 to 4, setting the ratio Fe₂O₃ / (Fe₂O₃ + CaO) to 0.76 to 0.80 resulted in RDIs falling below 10 and thus further improved. In the case where the ratio Fe₂O₃ / (Fe₂O₃ + CaO) was set to lower than 0.76, lime particles having a high melting point adjoined one another, and melting did not progress due to the temperature being high for a short time in the sintering process, so that only extremely fragile sintered ore was obtained.

### <Test 2>

Under the same raw material conditions as in Comparative Example 2 used in Test 1, raw materials having a ratio Fe₂O₃ / (Fe₂O₃ + CaO) of 0.76 to 0.84 were added in a latter half of granulation of compounded raw materials for sintering other than Fe₂O₃ and CaO of which the ratio Fe₂O₃ / (Fe₂O₃ + CaO) was adjusted to 0.76 to 0.84, and thus particles composing sintered ore were provided with a coating layer as an outer layer of which the ratio Fe₂O₃ / (Fe₂O₃ + CaO) was 0.76 to 0.84. The effects of this case were studied.

In Test 2, raw materials accounting for 25% by mass (dry base) of the raw materials except for coke breeze were mixed such that the ratio Fe₂O₃ / (Fe₂O₃ + CaO) after sintering became 0.8. Here, it is expected that Fe turns into Fe₂O₃ or FeO (present as magnetite). In this test, as Comparative Example 2, the materials were mixed on the assumption that FeO would account for 5.5%. As can be seen also from Table 2, FeO can be expected to mainly account for 0 to 20 mass%. The ratio Fe₂O₃ / (Fe₂O₃ + CaO) after sintering of the coated raw materials can be estimated from FeO after sintering. Specifically, since T. Fe remains the same before and after sintering, when Fe' derived from FeO from the ratio of FeO measured after sintering is calculated from T. Fe among the compounded raw materials for sintering, and it is assumed that all iron becomes divalent or trivalent iron ions, T. Fe - Fe' can be calculated as Fe* derived from Fe₂O₃. This Fe* represents the ratio of Fe₂O₃ when calculated as follows: Fe* / 55.85 × (55.85 + 24) / (1 - LOI / 100). Here, correction is made as the raw materials decrease by an amount corresponding to an LOI, and CaO is also divided by (1 - LOI / 100). LOI stands for Loss on Ignition and is specified in JIS M 8700: 2013.

Table 3 below shows the components of raw materials used for mixture, and calculated values of Fe₂O₃ after sintering and the ratio Fe₂O₃ / (Fe₂O₃ + CaO) calculated by the above-described method.

**[Table 3]**

| | Analytical values of raw materials | | | | Calculated values | |
|---|---|---|---|---|---|---|
| | T.Fe (mass%) | SiO₂ (mass%) | CaO (mass%) | LOI | Fe₃O₃ after sintering (mass%) | Fe₃O₃ / (Fe₃O₃ + CaO) |
| Mean of all raw materials | 51.7 | 4.6 | 9.0 | 9.9 | 75.3 | 0.88 |
| Main raw materials | 54.0 | 3.2 | 7.1 | 9.7 | 78.8 | 0.91 |
| Coating raw materials | 44.8 | 8.7 | 14.9 | 10.4 | 64.7 | 0.80 |

In Test 2, main raw materials (first compounded raw materials for sintering) accounting for 75 mass% of all materials and water (moisture that makes the final granulated material 7.5 mass%) were fed into a drum mixer and granulated for a total of 4.5 minutes, and then coating raw materials (second compounded raw materials for sintering) were added and the materials were granulated for 0.5 minutes to produce granulated raw materials for sintering. Thereafter, the granulated raw materials for sintering were sintered using a pot testing machine. The sintering was performed in a state where the air volume was held constant at 1.2 m³/min. Table 4 below shows, along with the RDI of the sintered ore of Comparative Example 2, the RDI of the sintered ore of Example 5 obtained by producing the granulated raw materials for sintering by the above-described coating method and then sintering these materials.

**[Table 4]**

| | RDI |
|---|---|
| Comparative Example 2 | 31.6 |
| Example 5 | 24.3 |

From the result of Table 4, a comparison between Comparative Example 2 and Example 5 shows that coating an inner layer composed of main raw materials of which the ratio Fe₂O₃ / (Fe₂O₃ + CaO) between Fe₂O₃ and CaO was 0.91 and did not meet the range of 0.76 to 0.84 with an outer layer composed of raw materials of which the ratio Fe₂O₃ / (Fe₂O₃ + CaO) between Fe₂O₃ and CaO was 0.8 and met the range of 0.76 to 0.84 allowed the sintered ore of Example 5 provided with the coating layer to have an improved RDI compared with the RDI of the sintered ore of Comparative Example 2.

### Industrial Applicability

The production method and the disintegration suppression method for sintered ore according to the present invention can be applied not only to sintered ore but also to raw materials for iron production containing Fe₂O₃ and CaO, and particularly to raw materials of which the reduction-disintegration characteristics need to be mitigated.

### Reference Signs List

- 1, 11: Particle
- 2, 12: Sintered ore
- 13: Inner layer
- 14: Outer layer

## Claims

1. A sintered ore production method comprising granulating compounded raw materials for sintering to produce granulated raw materials for sintering and sintering the granulated raw materials for sintering to obtain sintered ore, **characterized in that**,
as the compounded raw materials for sintering, materials of which a ratio Fe₂O₃ / (Fe₂O₃ + CaO) between Fe₂O₃ and CaO included among the materials is within a range of 0.76 to 0.84 are used for sintering.

2. The sintered ore production method according to claim 1, wherein
the ratio Fe₂O₃ / (Fe₂O₃ + CaO) between Fe₂O₃ and CaO included among the compounded raw materials for sintering is set to 0.76 to 0.80.

3. The sintered ore production method according to claim 1 or 2, wherein
Fe₂O₃ and CaO included among the compounded raw materials for sintering with the ratio Fe₂O₃ / (Fe₂O₃ + CaO) adjusted to 0.76 to 0.84 are added from a later stage during granulation of compounded raw materials for sintering other than the Fe₂O₃ and CaO.

4. A sintered ore disintegration suppression method, **characterized in that**,
as compounded raw materials for sintering, materials of which a ratio Fe₂O₃ / (Fe₂O₃ + CaO) between Fe₂O₃ and CaO included among the materials is within a range of 0.76 to 0.84 are used for sintering to obtain sintered ore having a low reduction-disintegration property.
